# EUROPEAN PATENT APPLICATION

(11) **EP 1 696 339 A2**
(43) Date of publication of application: **30.08.2006**
(21) Application number: 06100516.1
(22) Date of filing: 18.01.2006
(51) Int. Cl.: G06F 17/28

(54) **System and method for testing data format using targeted variant input**

(30) Priority: 25.02.2005 US 66018
(71) Applicant: Microsoft Corporation, Redmond WA 98052 (US)
(72) Inventor: Sarsfield, Brad, Redmond, WA 98052 (US)
(74) Representative: Zimmer, Franz-Josef

(57) **Abstract**

The value of one or more selected nodes in a data format definition may be substituted with a variant placeholder. At runtime, when an input token stream is generated from the data format definition, each variant placeholder will be replaced with a random value, thereby providing targeted variant input.

## Description

### FIELD OF THE INVENTION

The present invention relates to the field of data format development, and, more specifically, to testing a data format for protection against security problems and other flaws.

### BACKGROUND OF THE INVENTION

In conventional computer networks, large quantities of data are compiled, stored, and transferred between a number of different computing devices. To make the compilation, storage, and transfer of data more secure and efficient, a number of different data formats have been developed. One type of data format is a file format, which is a format that describes how the data in a file is organized. For example, when a word processor saves a file, the word processor saves formatting information in addition to the text of the file. This formatting information is typically a collection of characters, instructions, and / or other information that can be split or parsed into tokens which follow the rules of a particular data format.

Another type of data format is a protocol. A protocol is a format for transmitting data between two devices. A protocol describes properties such as, for example, a type of error checking to be used, a data compression method, how the sending device will indicate that it has finished sending a message, and how the receiving device will indicate that it has received a message. The Open System Interconnection ("OSI") is a model that defines a networking framework for implementing protocols in seven layers. Generally, control is passed from one layer to the next, starting at the application layer in one station, proceeding to the bottom layer, over the channel to the next station and back up the hierarchy. The hierarchy includes the following layers: application, presentation, session, transport, network, data link, and physical.

Application layer protocols are protocols that are employed to transfer information between the client and the server sides of an application. Generally, application layer protocols define the types of messages exchanged, the syntax of the various message types, and rules for determining when and how an application sends messages and responds to messages. A number of different application layer protocols may be employed depending on the type of data that is being exchanged. For example, Hyper Text Transfer Protocol (HTTP) is employed to transfer web page content, File Transfer Protocol (FTP) is employed to transfer files over the Internet, and Simple Mail Transfer Protocol (SMTP) is employed to transfer email.

Security flaws associated with data formats and, in particular, application layer protocols, have been an industry wide problem for quite some time. Such security flaws have created some very serious problems, including, but not limited to, a number of widespread and damaging computer viruses. While the monetary damages associated with such security flaws are sometimes difficult to quantify, they have the potential to be staggering. Even though data formats are typically both well documented and understood, a number of fundamental data format implementation problems nevertheless exist. One common problem is that there may be a discrepancy or difference between a specification that describes a data format and an actual implementation of the data format. Another common problem occurs when there is a flaw in the actual parsing of the data format. Many of these problems will manifest themselves in the form of security vulnerabilities. Accordingly, to reduce the possibility of these flaws, it is desirable to perform extensive testing on a data format prior to its implementation.

One possible data format testing technique would be to try and predict the potential flaws associated with a data format and to develop test data formats that would account for these potential flaws. While, in theory, this appears to be a sensible approach, trying to predict in advance the wide range of problems that might occur and to generate test data formats that account for these problems requires an enormous amount of time and effort. A more feasible conventional approach to this problem involves forming completely random data and passing the completely random data to a data format parser. Because random data is not predictable, it provides a reasonable estimation of the unpredictable nature of future data format flaws without having to try and predict what the actual flaws will be. While the use of completely random data is a somewhat effective technique, the inherent variation of random data results in a number of drawbacks. In particular, for any relatively complex data format, the completely random data will typically not conform closely enough to the data format to enable it to be tested beyond the first few parsing routines. Thus, this technique will often fail to test the more complex aspects of the data format. Due to these and other drawbacks, there is a need in the art for improved data format testing techniques.

### SUMMARY OF THE INVENTION

The present invention is directed to systems and methods for testing a data format using targeted variant input. According to an aspect of the invention, the data format may be defined using a context free grammar such as, for example, Backus Naur Form. The resulting data format definition may include a number of different token definitions. The context free data format definition may then be transformed into a human readable data format definition written in a language such as, for example Extensible Markup Language (XML). Each token in the context free data format definition may become a node in the human readable data format definition. The value of one or more selected nodes in the data format definition may then be substituted with a variant placeholder. The selected nodes may be chosen based on parameters in the data format specification. At runtime, when an input token stream is generated from the data format definition, each variant placeholder is replaced with a random value, thereby providing targeted variant input. New input token streams may be repeatedly generated, with each new stream including a new random value for each variant placeholder. Each resulting input stream may be submitted to a data format parser for testing.

Additional features and advantages of the invention will be made apparent from the following detailed description of illustrative embodiments that proceeds with reference to the accompanying drawings.

### BRIEF DESCRIPTION OF THE DRAWINGS

The illustrative embodiments will be better understood after reading the following detailed description with reference to the appended drawings, in which:

Fig. 1 depicts an exemplary system for testing a data format in accordance with the present invention;

Fig. 2 is a flowchart of an exemplary method for testing a data format in accordance with the present invention;

Figs. 3a and 3b depict exemplary data format definitions in accordance with the present invention;

Figs. 4a and 4b depict exemplary human readable data format definitions in accordance with the present invention;

Figs. 5a and 5b depict exemplary variant human readable data format definitions in accordance with the present invention;

Fig. 6 is a block diagram representing an exemplary network environment having a variety of computing devices in which the present invention may be implemented; and

Fig. 7 is a block diagram of an exemplary representing an exemplary computing device in which the present invention may be implemented.

### DETAILED DESCRIPTION OF ILLUSTRATIVE EMBODIMENTS

The subject matter of the present invention is described with specificity to meet statutory requirements. However, the description itself is not intended to limit the scope of this patent. Rather, the inventors have contemplated that the claimed subject matter might also be embodied in other ways, to include different acts or elements similar to the ones described in this document, in conjunction with other present or future technologies.

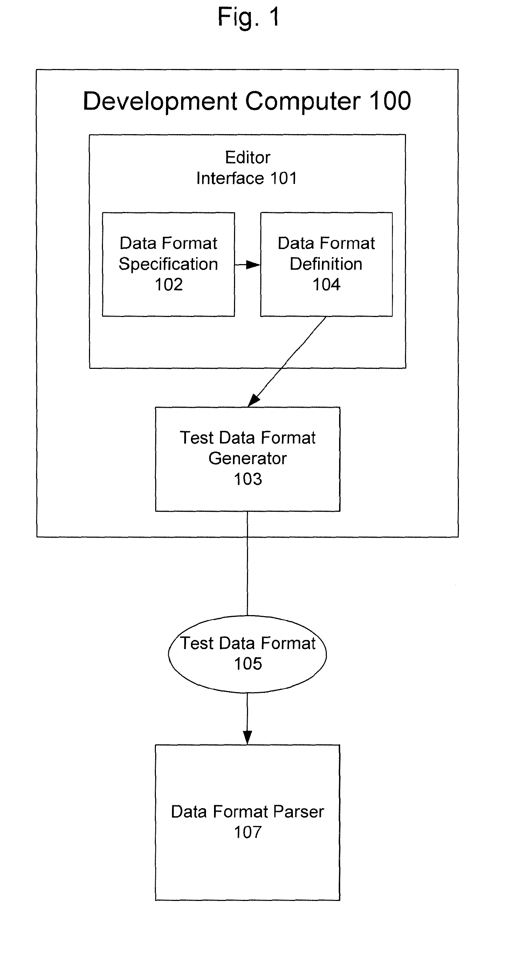

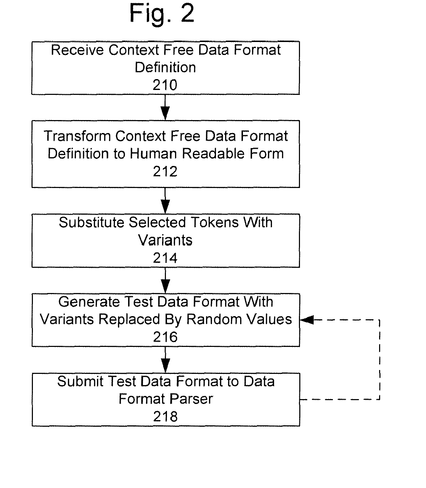

An exemplary system for testing a data format in accordance with the present invention is shown in Fig. 1, As set forth above, the data format may be, for example, a file format, a protocol, or any other type of data format. Generally, the system includes one or more development computers 100 for generating a targeted variant test data format 105. The test data format 105 is submitted as input to a data format parser 107 which parses and tests the input. Development computer 100 or another accessible computer may provide a text editor interface 101 which enables a data format specification 102 to be generated. The data format specification is a document that describes the desired properties of the data format and other like characteristics. Text editor interface 101 also enables a data format definition 104 to be generated. The data format definition 104 is a document that defines values for tokens within the data format, sets the order of the tokens, and may also include other information about the data format. Data format definition 104 may be generated based on the information in data format specification 102. After its completion, data format definition 104 is made available to test data format generator 103, which uses the information therein to generate the targeted variant test data format 105. The test data format generation process is described in detail below with reference to Fig. 2.

As set forth above, data format specification 102 describes the data format's desired properties. In particular, a data format may have a number of set properties such as, for example, a fixed length property, a length prefix property, and an offset property. The fixed length property has a pre-selected fixed length, and, therefore, includes only a data token. The length prefix property, on the other hand, includes both a data token and a preceding length token. The length of the data token is determined by the value of the length token. The offset property includes a number of length tokens, a number of offset tokens, and a data token. The data token includes a number of data sets, each with a corresponding data token and a corresponding offset token. The length of each data set is determined by the value of its corresponding length token, and the position of each data set within the data token is determined by its corresponding offset token. Examples of these three set properties will be provided below.

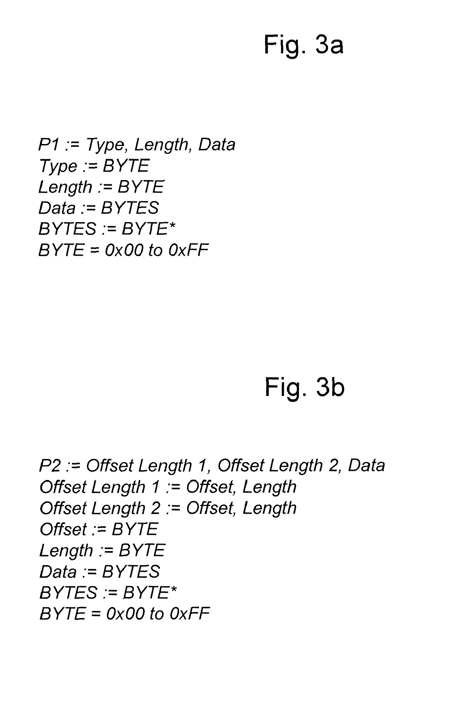

A flowchart of an exemplary method for generating a targeted variant test data format 105 in accordance with the present invention is shown in Fig. 2. At act 210, data format definition 104 is received by the test data format generator 103. The data format definition 104 may define the data format in a context free grammar such as, for example, Backus Naur Form (BNF). Two exemplary context free data format definitions for two different exemplary data formats are shown in Figs. 3a and 3b. The first data format ("P1") includes both fixed length data and length prefix data, while the second data format ("P2") includes offset data.

Referring now to Fig. 3a, the first line of the P1 data format definition indicates that P1 includes three tokens: "Type" followed by "Length" followed by "Data". The "Type" token specifies the fixed length data, the "Length" token specifies the length of the length prefix data, and the "Data" token specifies the data for the length prefix data. The remaining lines in Fig. 3a define the values of the tokens. Specifically, the "Type" and "Length" tokens will each include a byte of data, while the "Data" token will include a variable number of data bytes determined by the value of the "Length" token.

Referring now to Fig. 3b, the first line of the P2 data format definition indicates that P2 includes three tokens: "Offset Length 1" followed by "Offset Length 2" followed by "Data". Each of the two "Offset Length" tokens includes an "Offset" token and a "Length" token. The "Offset" tokens specify a position of a corresponding data set within the "Data" token, while the "Length" tokens specify a length of a corresponding data set within the "Data" token. The remaining lines in Fig. 3b define the values of the tokens. Specifically, the "Offset" and "Length" tokens will each include a byte of data, while the "Data" token will include a variable number of data bytes determined by the combined values of the "Length" tokens.

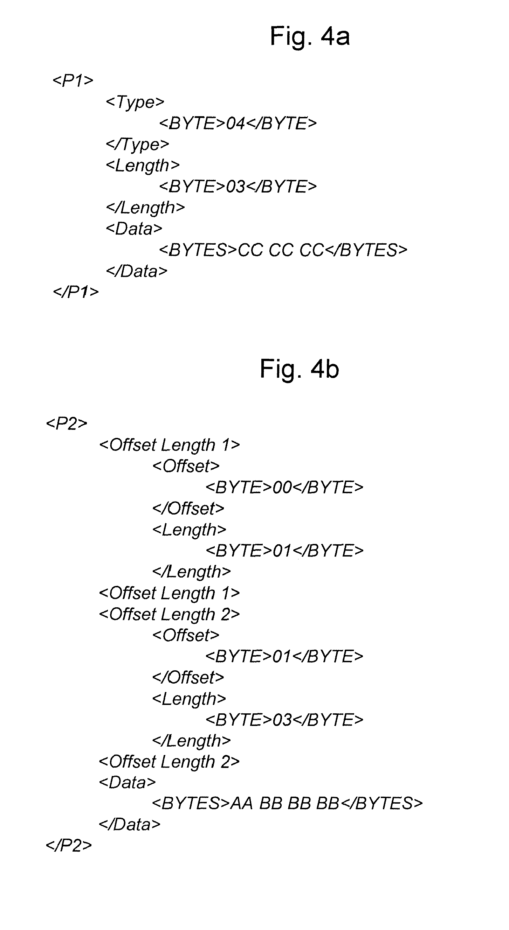

Returning to Fig. 2, at act 212, the context free data format definition is transformed into a human readable form. The human readable data format definition may be defined in a language such as, for example, extensible markup language (XML). Each token in the context free data format definition may become a node in the human readable data format definition. The resulting leaf level nodes in the human readable definition will correspond to a series of one or more bytes. The human readable data format definitions provide an intuitive and easily comprehendible schema within which the values of the tokens may be set. It should be noted, however, that converting the data format definition into human readable form need not necessarily be done in every case and that act 212 is an optional act. Exemplary human readable data format definitions for data formats P1 and P2 are shown in Figs. 4a and 4b, respectively. These exemplary human readable data format definitions are defined in XML.

Referring now to Fig. 4a, the value of the "Type" token is set to four, the value of the "Length" token is set to three, and the "Data" token includes three bytes each with the binary value "CC". As should be appreciated, the "Data" token includes three bytes because the "Length" token has a value of three. The resulting token stream for data format P1 in accordance with the definition shown in Fig. 4a will be as follows: **P1 {04 03 CC CC CC}.**

Referring now to Fig. 4b, for "Offset Length 1", the value of the "Offset" token is set to zero, and the value of the "Length" token is set to one. For "Offset Length 2", the value of the "Offset" token is set to one, and the value of the "Length" token is set to three. The "Data" token includes two data sets. The first set of data corresponds to "Offset Length 1" and includes the first byte of data with the binary value "AA". The second set of data corresponds to "Offset Length 2" and includes the second through fourth bytes of data each with the binary value "BB". As should be appreciated, the first data set starts at the first byte in the "Data" token because it has an offset of zero, while the second data set starts at the second byte in the "Data" token because it has an offset of one. The resulting token stream for data format P1 in accordance with the definition shown in Fig. 4b will be as follows: **P2 {00 01 01 03 AA BB BB BB}.**

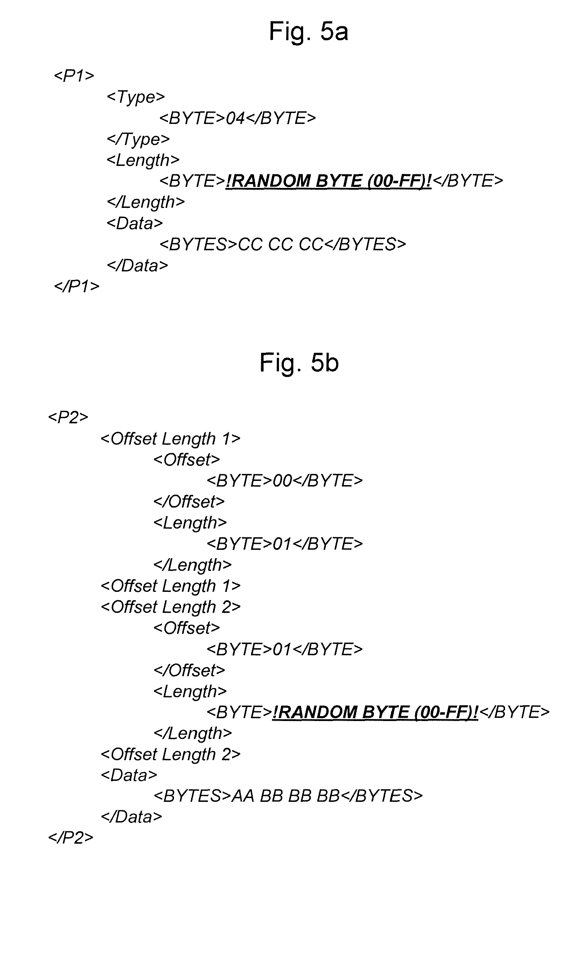

Returning to Fig. 2, at act 214, the values of one or more selected tokens are substituted with a variant placeholder. As mentioned previously, it may be more intuitive for this substitution to be made within a human readable form of the data format definition 104. However, this substitution need not necessarily be made from the human readable data format definition and may, for example, be made from within the context free data format definition. Data format definitions for P1 and P2 with some exemplary variant substitutions are shown in Figs. 5a and 5b, respectively. In Fig. 5a, the value of the "Length" token has been substituted with a variant placeholder, while in Fig. 5b, the value of the "Length" token for "Offset Length 2" has been substituted with a variant placeholder. The resulting token stream for data format P1 in accordance with the definition shown in Fig. 5a will be as follows: **P1 {04 XX CC CC CC},** while P2 in accordance with Fig. 5b will be: **P2 {00 01 01 XX AA BB BB BB},** with "XX" representing the variant placeholders. More than one token within a data format may be replaced with a variant placeholder.

Returning to Fig. 2, at act 216, input test data format 105 is generated. Input test data format 105 is a token stream in which each token has its corresponding value from the data format definition and variant placeholder is replaced with a random value. At act 218, the input test data format 105 is submitted to data format parser 107. The generation of input test data format 105 may be repeated any number of times (as indicated by the dashed loop in Fig. 2), with every new input stream including a new random value for each variant placeholder. New input streams may be repeatedly generated and submitted to data format parser 107 until one or more flaws in the data format are detected. When a flaw is detected, the data format may be debugged by altering the data format as necessary to alleviate the flaw. Of course, it is also possible that, for a given set of variant substitutions, no flaw may be detected. This may be determined by repeatedly generating input streams until it is believed that there has been a sufficient sampling of random values to conclude that there is no flaw present for the selected variant tokens. Once this conclusion has been reached, the actual constant value for the variant tokens may be returned and one or more other tokens in the data format may be selected to be the variant tokens.

The tokens that are selected for variant substitution may be determined based on information in the data format specification 102 and on other characteristics of the data format. For example, referring to data format P2, "Offset length 1" may correspond to a username, while "Offset length 2" may correspond to a password. Thus, as in the example of Fig. 5b, the "Length" token of "Offset Length 2" may be substituted with a variant placeholder to test how data format P2 behaves with passwords of varying lengths. In this scenario, the "Length" token of "Offset Length 2" may be tested to the point of breaking, while the other tokens in the data format P2 remain constant.

Some of the benefits of targeted variant input as opposed to complete random input are readily apparent from this example. In particular, without targeting the variation of data format P2 to the "Offset" token of "Offset Length 2", it is quite possible that this token might never, in fact, be tested. To understand this, consider an example of what might happen if all of the tokens in data format P2 were assigned random values. Now, for purposes of illustration, assume that, when a variant input stream is generated, "Offset Length 1" is assigned a offset of zero and a length of three, while "Offset Length 2" is assigned an offset of two. In this scenario, an error will be detected because the length of "Offset Length 1" is greater than the offset of "Offset Length 2". Thus, due to the error, testing will not progress to the "Offset" token of "Offset Length 2". While this is a relatively simple example, many data formats are much more complex and involve many more tokens, thereby increasing the possibility that all parts of the data format will not be tested.

In addition to the context free grammar data format definition described above, it is also possible to define the data format in a language based definition. Such a language based data format definition may be similar to functional programming or may be, for example, a stack based language definition. An exemplary language based definition for data format P 1 is shown below:
AddByte (0x04)
AddRandomByte ()
AddByte (0xCC)
AddByte (0xCC)
AddByte (0xCC)
This exemplary language based definition simply lists the corresponding values for each token and also includes the variant represented by the "AddRandomByte" command. Of course, this definition does not show the relationships between tokens such as the "Length" and "Data" tokens of the Backus Naur Form data format definition for data format P1 shown in Fig. 3a. However, this language based definition still does provide the advantages associated with targeted variant input described above.

In addition to a completely random value, the variants may also be replaced with "smart" values. These smart values enable well known boundaries for each of the tokens in the token stream to be tested. The smart values may include values such as a null value (00), a correct value (N), a half way value (N/2), a maximum value, a value within a pre-determined range of values greater than the correct value (N+X), and a value within a pre-determined range of values less than the correct value (N-X). For example, for a length prefix token with a correct value of "06", the available smart values may include a null value (00), a correct value (06), a half way value (03), a one greater than correct value (07), and a one less than correct value (05). These smart values may test different attributes depending on the particular token into which these smart values are substituted. For example, for the length prefix token, the smart values (N-X) and (N+X) simply adjust the length of a corresponding data set. However, for an offset token, a smart value of (N-X) will adjust the position of a corresponding data set so that it is somewhere inside a previous data set, while a value of (N+X) will adjust the position of a corresponding data set so that it is somewhere inside a subsequent data set.

Accordingly, as set forth above with reference to the exemplary systems and methods of Figs. 1-5, the present invention provides systems and methods for generating a test data format. As is apparent from the above, all or portions of the various systems, methods, and aspects of the present invention may be embodied in hardware, software, or a combination of both. When embodied in software, the methods and apparatus of the present invention, or certain aspects or portions thereof, may be embodied in the form of program code (i.e., instructions). This program code may be stored on a computer-readable medium, such as a magnetic, electrical, or optical storage medium, including without limitation a floppy diskette, CD-ROM, CD-RW, DVD-ROM, DVD-RAM, magnetic tape, flash memory, hard disk drive, or any other machine-readable storage medium, wherein, when the program code is loaded into and executed by a machine, such as a computer or server, the machine becomes an apparatus for practicing the invention. A computer on which the program code executes will generally include a processor, a storage medium readable by the processor (including volatile and non-volatile memory and/or storage elements), at least one input device, and at least one output device. The program code may be implemented in a high level procedural or object oriented programming language. Alternatively, the program code can be implemented in an assembly or machine language. In any case, the language may be a compiled or interpreted language.

The present invention may also be embodied in the form of program code that is transmitted over some transmission medium, such as over electrical wiring or cabling, through fiber optics, over a network, including a local area network, a wide area network, the Internet or an intranet, or via any other form of transmission, wherein, when the program code is received and loaded into and executed by a machine, such as a computer, the machine becomes an apparatus for practicing the invention.

When implemented on a general-purpose processor, the program code may combine with the processor to provide a unique apparatus that operates analogously to specific logic circuits.

Moreover, the invention can be implemented in connection with any computer or other client or server device, which can be deployed as part of a computer network, or in a distributed computing environment. In this regard, the present invention pertains to any computer system or environment having any number of memory or storage units, and any number of applications and processes occurring across any number of storage units or volumes, which may be used in connection with the present invention. The present invention may apply to an environment with server computers and client computers deployed in a network environment or distributed computing environment, having remote or local storage. The present invention may also be applied to standalone computing devices, having programming language functionality, interpretation and execution capabilities for generating, receiving and transmitting information in connection with remote or local services.

Distributed computing facilitates sharing of computer resources and services by exchange between computing devices and systems. These resources and services include, but are not limited to, the exchange of information, cache storage, and disk storage for files. Distributed computing takes advantage of network connectivity, allowing clients to leverage their collective power to benefit the entire enterprise. In this regard, a variety of devices may have applications, objects or resources that may implicate processing performed in connection with the present invention.

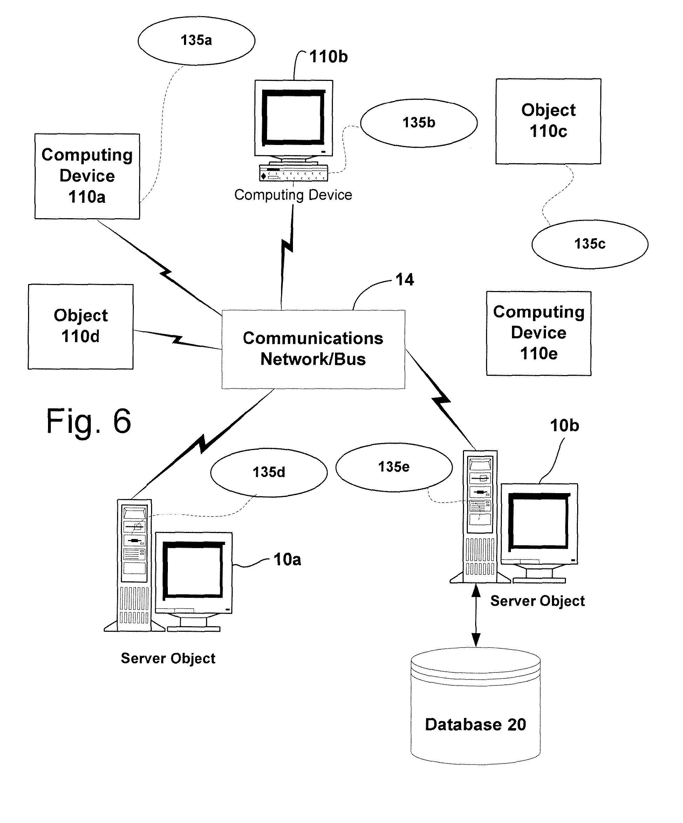

Fig. 6 provides a schematic diagram of an exemplary networked or distributed computing environment. The distributed computing environment comprises computing objects 10a, 10b, etc. and computing objects or devices 110a, 110b, 110c, etc. These objects may comprise programs, methods, data stores, programmable logic, etc. The objects may comprise portions of the same or different devices such as PDAs, televisions, MP3 players, personal computers, etc. Each object can communicate with another object by way of the communications network 14. This network may itself comprise other computing objects and computing devices that provide services to the system of Fig. 6, and may itself represent multiple interconnected networks. In accordance with an aspect of the invention, each object 10a, 10b, etc. or 110a, 110b, 110c, etc. may contain an application that might make use of an API, or other object, software, firmware and/or hardware, to request use of the processes used to implement the present invention.

It can also be appreciated that an object, such as 110c, may be hosted on another computing device 10a, 10b, etc. or 110a, 110b, etc. Thus, although the physical environment depicted may show the connected devices as computers, such illustration is merely exemplary and the physical environment may alternatively be depicted or described comprising various digital devices such as PDAs, televisions, MP3 players, etc., software objects such as interfaces, COM objects and the like.

There are a variety of systems, components, and network configurations that support distributed computing environments. For example, computing systems may be connected together by wired or wireless systems, by local networks or widely distributed networks. Currently, many of the networks are coupled to the Internet, which provides the infrastructure for widely distributed computing and encompasses many different networks. Any of the infrastructures may be used for exemplary communications made incident to the present invention.

The Internet commonly refers to the collection of networks and gateways that utilize the TCP/IP suite of protocols, which are well-known in the art of computer networking. TCP/IP is an acronym for "Transmission Control Protocol/Intemet Protocol." The Internet can be described as a system of geographically distributed remote computer networks interconnected by computers executing networking protocols that allow users to interact and share information over the network(s). Because of such widespread information sharing, remote networks such as the Internet have thus far generally evolved into an open system for which developers can design software applications for performing specialized operations or services, essentially without restriction.

Thus, the network infrastructure enables a host of network topologies such as client/server, peer-to-peer, or hybrid architectures. The "client" is a member of a class or group that uses the services of another class or group to which it is not related. Thus, in computing, a client is a process, i.e., roughly a set of instructions or tasks, that requests a service provided by another program. The client process utilizes the requested service without having to "know" any working details about the other program or the service itself In a client/server architecture, particularly a networked system, a client is usually a computer that accesses shared network resources provided by another computer, e.g., a server. In the example of Fig. 6, computers 110a, 110b, etc. can be thought of as clients and computer 10a, 10b, etc. can be thought of as servers, although any computer could be considered a client, a server, or both, depending on the circumstances. Any of these computing devices may be processing data in a manner that implicates the invention.

A server is typically a remote computer system accessible over a remote or local network, such as the Internet. The client process may be active in a first computer system, and the server process may be active in a second computer system, communicating with one another over a communications medium, thus providing distributed functionality and allowing multiple clients to take advantage of the information-gathering capabilities of the server. Any software objects utilized pursuant to the invention may be distributed across multiple computing devices.

Client(s) and server(s) may communicate with one another utilizing the functionality provided by a protocol layer. For example, Hypertext Transfer Protocol (HTTP) is a common protocol that is used in conjunction with the World Wide Web (WWW), or "the Web." Typically, a computer network address such as an Internet Protocol (IP) address or other reference such as a Universal Resource Locator (URL) can be used to identify the server or client computers to each other. The network address can be referred to as a URL address. Communication can be provided over any available communications medium.

Thus, Fig. 6 illustrates an exemplary networked or distributed environment, with a server in communication with client computers via a network/bus, in which the present invention may be employed. The network/bus 14 may be a LAN, WAN, intranet, the Internet, or some other network medium, with a number of client or remote computing devices 110a, 110b, 110c, 110d, 110e, etc., such as a portable computer, handheld computer, thin client, networked appliance, or other device, such as a VCR, TV, oven, light, heater and the like in accordance with the present invention. It is thus contemplated that the present invention may apply to any computing device in connection with which it is desirable to test a protocol using targeted variant input.

In a network environment in which the communications network/bus 14 is the Internet, for example, the servers 10a, 10b, etc. can be servers with which the clients 110a, 110b, 110c, 110d, 110e, etc. communicate via any of a number of known protocols such as HTTP. Servers 10a, 10b, etc. may also serve as clients 110a, 110b, 110c, 110d, 110e, etc., as may be characteristic of a distributed computing environment.

Communications may be wired or wireless, where appropriate. Client devices 110a, 110b, 110c, 110d, 110e, etc. may or may not communicate via communications network/bus 14, and may have independent communications associated therewith. For example, in the case of a TV or VCR, there may or may not be a networked aspect to the control thereof. Each client computer 110a, 110b, 110c, 110d, 110e, etc. and server computer 10a, 10b, etc. may be equipped with various application program modules or objects 135 and with connections or access to various types of storage elements or objects, across which files or data streams may be stored or to which portion(s) of files or data streams may be downloaded, transmitted or migrated. Any computer 10a, 10b, 110a, 110b, etc. may be responsible for the maintenance and updating of a database, memory, or other storage element 20 for storing data processed according to the invention. Thus, the present invention can be utilized in a computer network environment having client computers 110a, 110b, etc. that can access and interact with a computer network/bus 14 and server computers 10a, 10b, etc. that may interact with client computers 110a, 110b, etc. and other like devices, and databases 20.

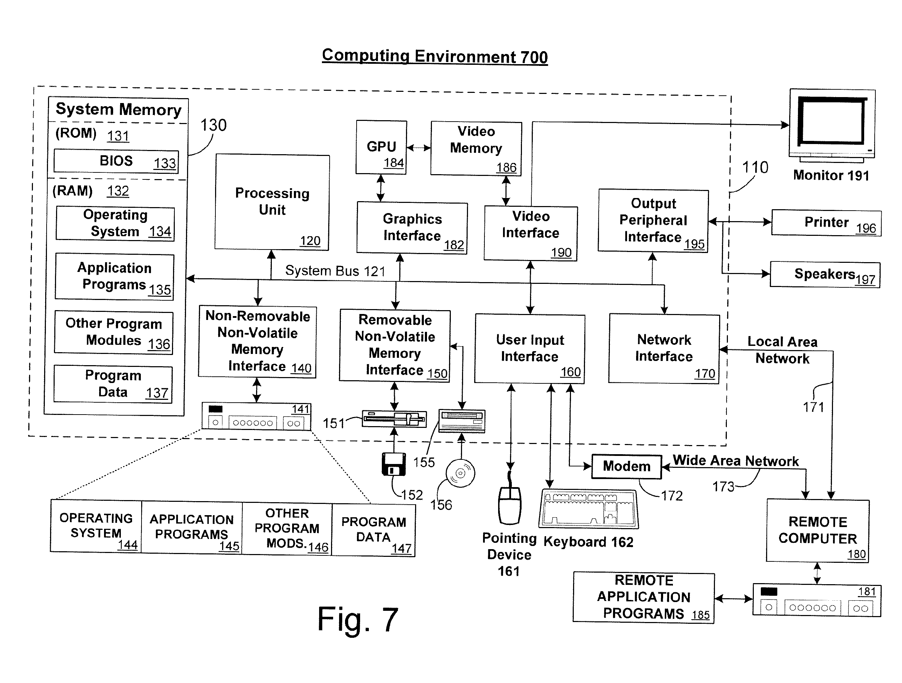

Fig. 7 and the following discussion are intended to provide a brief general description of a suitable computing device in connection with which the invention may be implemented. For example, any of the client and server computers or devices illustrated in Fig. 6 may take this form. It should be understood, however, that handheld, portable and other computing devices and computing objects of all kinds are contemplated for use in connection with the present invention, i.e., anywhere from which data may be generated, processed, received and/or transmitted in a computing environment. While a general purpose computer is described below, this is but one example, and the present invention may be implemented with a thin client having network/bus interoperability and interaction. Thus, the present invention may be implemented in an environment of networked hosted services in which very little or minimal client resources are implicated, e.g., a networked environment in which the client device serves merely as an interface to the network/bus, such as an object placed in an appliance. In essence, anywhere that data may be stored or from which data may be retrieved or transmitted to another computer is a desirable, or suitable, environment for operation of the object persistence methods of the invention.

Although not required, the invention can be implemented via an operating system, for use by a developer of services for a device or object, and/or included within application or server software that operates in accordance with the invention. Software may be described in the general context of computer-executable instructions, such as program modules, being executed by one or more computers, such as client workstations, servers or other devices. Generally, program modules include routines, programs, objects, components, data structures and the like that perform particular tasks or implement particular abstract data types. Typically, the functionality of the program modules may be combined or distributed as desired in various embodiments. Moreover, the invention may be practiced with other computer system configurations and protocols. Other well known computing systems, environments, and/or configurations that may be suitable for use with the invention include, but are not limited to, personal computers (PCs), automated teller machines, server computers, hand-held or laptop devices, multi-processor systems, microprocessor-based systems, programmable consumer electronics, network PCs, appliances, lights, environmental control elements, minicomputers, mainframe computers and the like.

Fig. 7 thus illustrates an example of a suitable computing system environment 700 in which the invention may be implemented, although as made clear above, the computing system environment 700 is only one example of a suitable computing environment and is not intended to suggest any limitation as to the scope of use or functionality of the invention. Neither should the computing environment 700 be interpreted as having any dependency or requirement relating to any one or combination of components illustrated in the exemplary operating environment 700.

With reference to Fig. 7, an exemplary system for implementing the invention includes a general purpose computing device in the form of a computer 110. Components of computer 110 may include, but are not limited to, a processing unit 120, a system memory 130, and a system bus 121 that couples various system components including the system memory to the processing unit 120. The system bus 121 may be any of several types of bus structures including a memory bus or memory controller, a peripheral bus, and a local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus (also known as Mezzanine bus).

Computer 110 typically includes a variety of computer readable media. Computer readable media can be any available media that can be accessed by computer 110 and includes both volatile and nonvolatile media, removable and non-removable media. By way of example, and not limitation, computer readable media may comprise computer storage media and communication media. Computer storage media include both volatile and nonvolatile, removable and non-removable media implemented in any method or technology for storage of information such as computer readable instructions, data structures, program modules or other data. Computer storage media include, but are not limited to, RAM, ROM, EEPROM, flash memory or other memory technology, CDROM, digital versatile disks (DVD) or other optical disk storage, magnetic cassettes, magnetic tape, magnetic disk storage or other magnetic storage devices, or any other medium which can be used to store the desired information and which can be accessed by computer 110. Communication media typically embody computer readable instructions, data structures, program modules or other data in a modulated data signal such as a carrier wave or other transport mechanism and include any information delivery media. The term "modulated data signal" means a signal that has one or more of its characteristics set or changed in such a manner as to encode information in the signal. By way of example, and not limitation, communication media include wired media such as a wired network or direct-wired connection, and wireless media such as acoustic, RF, infrared and other wireless media. Combinations of any of the above should also be included within the scope of computer readable media.

The system memory 130 includes computer storage media in the form of volatile and/or nonvolatile memory such as read only memory (ROM) 131 and random access memory (RAM) 132. A basic input/output system 133 (BIOS), containing the basic routines that help to transfer information between elements within computer 110, such as during start-up, is typically stored in ROM 131. RAM 132 typically contains data and/or program modules that are immediately accessible to and/or presently being operated on by processing unit 120. By way of example, and not limitation, Fig. 7 illustrates operating system 134, application programs 135, other program modules 136, and program data 137.

The computer 110 may also include other removable/non-removable, volatile/nonvolatile computer storage media. By way of example only, Fig. 7 illustrates a hard disk drive 141 that reads from or writes to non-removable, nonvolatile magnetic media, a magnetic disk drive 151 that reads from or writes to a removable, nonvolatile magnetic disk 152, and an optical disk drive 155 that reads from or writes to a removable, nonvolatile optical disk 156, such as a CD-RW, DVD-RW or other optical media. Other removable/non-removable, volatile/nonvolatile computer storage media that can be used in the exemplary operating environment include, but are not limited to, magnetic tape cassettes, flash memory cards, digital versatile disks, digital video tape, solid state RAM, solid state ROM and the like. The hard disk drive 141 is typically connected to the system bus 121 through a non-removable memory interface such as interface 140, and magnetic disk drive 151 and optical disk drive 155 are typically connected to the system bus 121 by a removable memory interface, such as interface 150.

The drives and their associated computer storage media discussed above and illustrated in Fig. 7 provide storage of computer readable instructions, data structures, program modules and other data for the computer 110. In Fig. 7 , for example, hard disk drive 141 is illustrated as storing operating system 144, application programs 145, other program modules 146 and program data 147. Note that these components can either be the same as or different from operating system 134, application programs 135, other program modules 136 and program data 137. Operating system 144, application programs 145, other program modules 146 and program data 147 are given different numbers here to illustrate that, at a minimum, they are different copies. A user may enter commands and information into the computer 110 through input devices such as a keyboard 162 and pointing device 161, such as a mouse, trackball or touch pad. Other input devices (not shown) may include a microphone, joystick, game pad, satellite dish, scanner, or the like. These and other input devices are often connected to the processing unit 120 through a user input interface 160 that is coupled to the system bus 121, but may be connected by other interface and bus structures, such as a parallel port, game port or a universal serial bus (USB). A graphics interface 182 may also be connected to the system bus 121. One or more graphics processing units (GPUs) 184 may communicate with graphics interface 182. A monitor 191 or other type of display device is also connected to the system bus 121 via an interface, such as a video interface 190, which may in turn communicate with video memory 186. In addition to monitor 191, computers may also include other peripheral output devices such as speakers 197 and printer 196, which may be connected through an output peripheral interface 195.

The computer 110 may operate in a networked or distributed environment using logical connections to one or more remote computers, such as a remote computer 180. The remote computer 180 may be a personal computer, a server, a router, a network PC, a peer device or other common network node, and typically includes many or all of the elements described above relative to the computer 110, although only a memory storage device 181 has been illustrated in Fig. 7 . The logical connections depicted in Fig. 7 include a local area network (LAN) 171 and a wide area network (WAN) 173, but may also include other networks/buses. Such networking environments are commonplace in homes, offices, enterprise-wide computer networks, intranets and the Internet.

When used in a LAN networking environment, the computer 110 is connected to the LAN 171 through a network interface or adapter 170. When used in a WAN networking environment, the computer 110 typically includes a modem 172 or other means for establishing communications over the WAN 173, such as the Internet. The modem 172, which may be internal or external, may be connected to the system bus 121 via the user input interface 160, or other appropriate mechanism. In a networked environment, program modules depicted relative to the computer 110, or portions thereof, may be stored in the remote memory storage device. By way of example, and not limitation, Fig. 7 illustrates remote application programs 185 as residing on memory device 181. It will be appreciated that the network connections shown are exemplary and other means of establishing a communications link between the computers may be used.

### Conclusion

Thus, systems and methods for testing a protocol using targeted variant input have been disclosed. While the present invention has been described in connection with the preferred embodiments of the various figures, it is to be understood that other similar embodiments may be used or modifications and additions may be made to the described embodiment for performing the same function of the present invention without deviating therefrom. Therefore, the present invention should not be limited to any single embodiment, but rather should be construed in breadth and scope in accordance with the appended claims.

## Claims

1. A method for testing a data format comprising:
receiving a data format definition that defines a plurality of tokens within the data format, each of the tokens having a corresponding value, at least one of the tokens having its corresponding value substituted with a variant; and
generating a token stream in accordance with the data format definition whereby at least one token in the stream has its corresponding value and each of the at least one variants is replaced with a random value.

2. The method of claim 1, comprising receiving a data format definition that defines a protocol.

3. The method of claim 1, comprising receiving a data format definition that defines a file format.

4. The method of claim 1, further comprising receiving a data format definition that defines the data format in a language based format.

5. The method of claim 1, further comprising receiving a data format definition that defines the data format in a context free grammar.

6. The method of claim 5, comprising receiving a data format definition that defines the data format in a Backus Naur Form context free grammar.

7. The method of claim 5, further comprising transforming the context free grammar data format definition into an extensible markup language data format definition.

8. The method of claim 1, comprising receiving a data format definition that defines the data format according to at least one of a fixed length data property, a length prefix property, and a data offset property.

9. The method of clam 1, further comprising replacing at least one of the variants with a random value that is selected from a set of smart values comprising at least one of a null value, a half way value, a maximum value, a correct value, a value within a pre-determined range of values greater than the correct value, and a value within a pre-determined range of values less than the correct value.

10. A computer readable medium having computer executable instructions for performing the steps recited in claim 1.

11. A system for testing a data format comprising:
a data format definition that defines a plurality of tokens within the data format, each of the tokens having a corresponding value, at least one of the tokens having its corresponding value substituted with a variant; and
a test data format generator that receives the data format definition and generates a token stream in accordance with the data format definition whereby at least one token in the stream has its corresponding value and each of the at least one variants is replaced with a random value.

12. The system of claim 11, wherein the data format is a file format.

13. The system of claim 11, wherein the data format is a protocol.

14. The system of claim 11, wherein the data format definition defines the data format in a language based format.

15. The system of claim 11, wherein the data format definition defines the data format in a context free grammar.

16. The system of claim 15, wherein the context free grammar is Backus Naur Form.

17. The system of claim 15, wherein the context free grammar data format definition is transformed into a human readable data format definition.

18. The system of claim 17, wherein the human readable data format definition defines the data format in extensible markup language.

19. The system of claim 11, wherein the data format comprises at least one of a fixed length data property, a length prefix property, and a data offset property.

20. The system of clam 11, wherein the random value is selected from a set of smart values comprising at least one of a null value, a half way value, a maximum value, a correct value, a value within a pre-determined range of values greater than the correct value, and a value within a pre-determined range of values less than the correct value.
